# EUROPEAN PATENT APPLICATION

(11) **EP 4 712 543 A1**
(43) Date of publication of application: **18.03.2026**
(21) Application number: 23948829.9
(22) Date of filing: 15.08.2023
(51) Int. Cl.: H04W 24/10

(54) **WIRELESS COMMUNICATION METHOD, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: YOU, Xin, Dongguan, Guangdong 523860 (CN); LIN, Xue, Dongguan, Guangdong 523860 (CN)
(74) Representative: Taor, Simon Edward William
(86) International application number: PCT/CN2023/113189
(87) International publication number: WO 2025/035398

(57) **Abstract**

A wireless communication method, a terminal device, and a network device. The method comprises: if a first condition is satisfied, the terminal device executes a first operation, wherein the first operation comprises one of the following: switching from a serving beam to a target beam; and sending first information to a network device, wherein the first information comprises a beam measurement result.

## Description

### TECHNICAL FIELD

The present application relates to the technical field of communication, and more particularly, to a method of wireless communication, a terminal device, and a network device.

### BACKGROUND

The conventional beam selection process includes measuring the beam by the terminal device, and after the measured beam measurement result is sent to the network device, the network device determines whether the terminal device needs to perform beam switching based on the beam measurement result, and finally indicates to the terminal device whether to perform beam switching. This beam switching process requires multiple signaling interactions, which leads to a long time required for beam switching, thus causing beam failure.

### SUMMARY

The present application provides a method of wireless communication, a terminal device, and a network device. Various aspects of the present application are described below.

According to a first aspect, a method of wireless communication is provided. The method include: when a first condition is satisfied, a terminal device performs a first operation. The first operation includes one of: switching from a serving beam to a target beam, or sending first information to a network device. The first information includes beam measurement result(s).

According to a second aspect, a method of wireless communication is provided. The method includes: a network device receives target information sent by a terminal device. The target information includes one of: first indication information configured to indicate that the terminal device switches from a serving beam to a target beam; first information including beam measurement result(s). The triggering of the first information is based on a first condition.

According to a third aspect, a terminal device is provided. The terminal device includes: when a first condition is satisfied, a processing unit, configured to perform a first operation. The first operation includes one of: switching from a serving beam to a target beam; or sending first information to a network device. The first information includes beam measurement result(s).

According to a fourth aspect, a network device is provided. The network device includes: a receiving unit configured to receive target information sent by a terminal device. The target information includes one of: first indication information configured to indicate that the terminal device switches from a serving beam to a target beam; or first information including beam measurement result(s). The triggering of the first information is based on a first condition.

According to a fifth aspect, provided a terminal device is provided. The terminal device comprises a processor, a memory and a communication interface. The memory is configured to store one or more computer programs. The processor is configured to invoke the computer programs in the memory to cause the terminal device to perform some or all of the steps in the method of the first aspect.

According to a sixth aspect, a network device is provided. The network device comprises a processor, a memory and a transceiver. The memory is configured to store one or more computer programs. The processor is configured to invoke the computer programs in the memory to cause the network device to perform some or all of the steps in the method of the second aspect.

According to a seventh aspect, an embodiment of the present application provides a communication system including the aforementioned terminal device and/or network device. In another possible design, the system may further include other devices that interact with the terminal device or the network device in the solutions provided by the embodiments of the present application.

According to an eighth aspect, an embodiment of the present application provides a computer-readable storage medium storing a computer program that causes a communication device (for example, a terminal device or a network device) to perform some or all of the steps in the method of the above various aspects.

According to a ninth aspect, an embodiment of the present application provides a computer program product. The computer program product comprises a non-transitory computer-readable storage medium storing a computer program operable to cause a communication device (for example, a terminal device or a network device) to perform some or all of the steps in the methods of the above various aspects. In some implementations, the computer program product may be a software installation package.

According to a tenth aspect, an embodiment of the present application provides a chip including a memory and a processor, and the processor can invoke and run a computer program from the memory to implement some or all of the steps described in the methods of the above various aspects.

In an embodiment of the present application, the terminal device may autonomously switch from the serving beam to the target beam based on whether the first condition is satisfied without waiting for an indication from the network device, which is helpful to reduce high delay caused by information interaction in the beam switching process.

On the other hand, in an embodiment of the present application, the terminal device may determine whether it is necessary to report the beam measurement result based on whether the first condition is satisfied. Compared with the periodic beam measurement result reporting method, it helps to reduce the time required for the beam switching process.

### BRIEF DESCRIPTION OF THE DRAWINGS

FIG. 1 shows a wireless communication system 100 to which an embodiment of the present application is applied.
FIG. 2 illustrates a flow of configuration and indication of a joint TCI state.
FIG. 3 illustrates a flow of configuration and indication of a separate TCI state.
FIG. 4 is a schematic flowchart of a method of wireless communication according to an embodiment of the present application.
FIG. 5 is a schematic diagram of a terminal device according to an embodiment of the present application.
FIG. 6 is a schematic diagram of a network device according to an embodiment of the present application.
FIG. 7 is a schematic structure diagram of a communication device according to an embodiment of the present application.

### DETAILED DESCRIPTION

Hereinafter, technical solutions in the present application will be described with reference to the accompanying drawings.

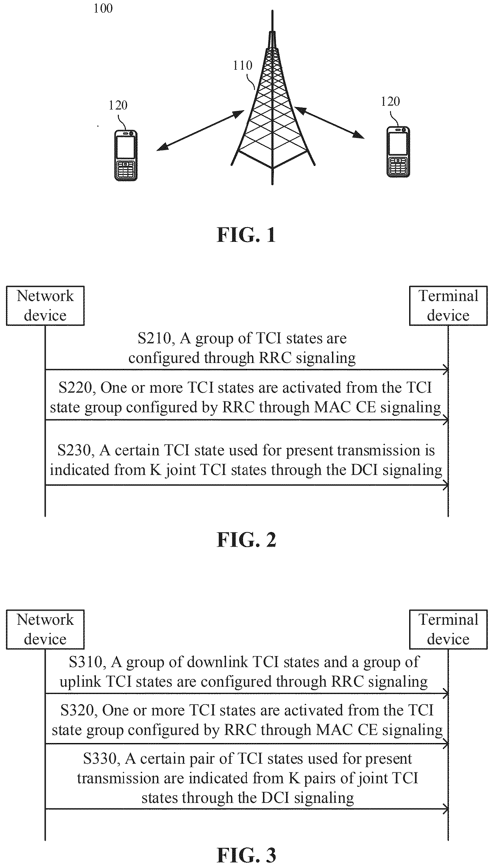

FIG. 1 shows a wireless communication system 100 to which an embodiment of the present application is applied. The wireless communication system 100 may include a network device 110 and terminal devices 120. The network device 110 may be a device in communication with the terminal devices 120. The network device 110 may provide communication coverage for a particular geographic area and may communicate with the terminal devices 120 located within the coverage area.

FIG. 1 exemplarily illustrates one network device and two terminals. Alternatively, the wireless communication system 100 may include a plurality of network devices and another number of terminal devices may be included within the coverage range of each network device, which is not limited by the embodiments of the present application.

Optionally, the wireless communication system 100 may further include other network entities such as a network controller, a mobility management entity and the like, which is not limited by the embodiments of the present application.

It should be understood that the technical solutions of the embodiments of the present application may be applied to various communication systems, such as a fifth generation (5G) system or a new radio (NR) system, a long term evolution (LTE) system, an LTE frequency division duplex (FDD) system, an LTE time division duplex (TDD), and the like. The technical solutions provided in the present application can also be applied to future communication systems, such as a sixth generation mobile communication system, a satellite communication system, and the like.

The terminal device in the embodiment of the present application may also be referred to as a user equipment (UE), an access terminal, a subscriber unit, a subscriber station, a mobile station, a mobile station (MS), a mobile terminal (MT), a remote station, a remote terminal, a mobile device, a user terminal, a terminal, a radio communication device, a user agent, or a user device. The terminal device in the embodiments of the present application may be a device that provides voice and/or data connectivity to a user, and may be used to connect people, objects, and machines, for example, a handheld device having a wireless connection function, a vehicle-mounted device, or the like. The terminal device in the embodiments of the present application may be a mobile phone, a pad, a notebook computer, a handheld computer, a mobile internet device (MID), a wearable device, a virtual reality (VR) device, an augmented reality (AR) device, a wireless terminal in industrial control, a wireless terminal in self driving, a wireless terminal in remote medical surgery, a wireless terminal in smart grid, a wireless terminal in transportation safety, a wireless terminal in smart city, a wireless terminal in smart home, or the like. Alternatively, the UE may be used to act as a base station. For example, a UE may act as a scheduling entity that provides sidelink signals between UEs in V2X or D2D, etc. For example, cellular telephones and automobiles communicate with each other using sidelink signals. Cellular phones and smart home devices communicate with each other without relaying communication signals through base stations.

The network device in the embodiments of the present application may be a device for communicating with a terminal device, and the network device may also be referred to as an access network device or a radio access network device, for example, the network device may be a base station. The network device in the embodiments of the present application may refer to a radio access network (RAN) node (or device) that connects the terminal device to the wireless network. The base station may broadly cover or be replaced with various names such as a NodeB, an evolved NodeB, a next generation base station, a relay station, an access point, a transmitting and receiving point (TRP), a transmitting point (TP), a primary station MeNB, a secondary station SeNB, a multi-standard radio (MSR) node, a home base station, a network controller, an access node, a radio node, an access point (AP), a transmission node, a transceiver node, a base band unit, a remote radio unit (RRU), an active antenna unit (AAU), a remote radio head (RRH), a central unit (CU), a distributed unit (DU), a location node, and the like. The base station may be a macro base station, a micro base station, a relay node, a donor node, or the like, or a combination thereof. The base station may also refer to a communication module, modem, or chip for disposal within the aforementioned devices or apparatuses. The base station may also be a mobile switching center, a device that assumes a base station function in device-to-device (D2D) communication, vehicle-to-everything (V2X) communication, and machine-to-machine (M2M) communication, a network-side device in 6G network, a device that assumes a base station function in a future communication system, or the like. The base stations may support networks of the same or different access technologies. The embodiments of the present application do not limit the specific technology and the specific device form adopted by the network device.

The base station may be fixed or mobile. For example, a helicopter or drone may be configured to act as a mobile base station, and one or more cells may move according to the location of the mobile base station. In other examples, a helicopter or drone may be configured as a device for communicating with another base station.

In some deployments, the network device in the embodiments of the present application may refer to a CU or a DU, or the network device includes a CU and a DU. The gNB may also include an AAU.

Network devices and terminal devices can be deployed on land, including indoor or outdoor, handheld or vehicle-mounted. They can also be deployed on the water. They can also be deployed on aircraft, balloons and satellites in the air. In the embodiments of the present application, the scenario in which the network device and the terminal device are located is not limited.

It should be understood that all or part of the functionality of the communication device in the present application may also be implemented by software functionality running on hardware, or by virtualization functionality instantiated on a platform, such as a cloud platform.

### Transmission configuration indicator (TCI state) activation and deactivation

In some protocols (for example, R15 and R16), it is stipulated that all channels and reference signals may each use independent beams, and each downlink or uplink channel and each reference channel transmit beam indication and configuration through separate signaling. For example, in a downlink transmission procedure, beam of a physical downlink control channel (PDCCH) separately indicates a TCI state for each control resource set (CORESET) by a media access control control element (MAC CE) signaling. The beam of a physical downlink shared channel (PDSCH) dynamically indicates a TCI state for the scheduled PDSCH by DCI. In uplink transmission, beams of a physical uplink control channel (PUCCH) and a channel sounding reference signal (SRS) are indicated by spatial relation information of each PUCCH resource or each SRS resource.

This design provides maximum flexibility and freedom for practical commercial systems to implement beamforming. For example, for each channel and reference signal, network devices can freely select beams to transmit. However, this design may lead to high signaling overhead in the beam switching process, and the delay of the beam switching process may be long due to the need for multiple information interactions in the beam switching process.

In addition, in some scenarios, the brought flexibility and freedom are often unnecessary in some actual network deployments. For example, in actual systems, a common deployment method is that multiple downlink channels and multiple uplink channels will use the same beam, and there is no need to indicate separately. In addition, another problem with the beam management of R15 and R16 is that the uplink and downlink adopt two completely different mechanisms: the downlink beam management is a mechanism based on TCI state, and the uplink beam management is a mechanism based on spatial relation information.

In order to solve the above problems and better support beam switching with low delay and less signaling overhead, a beam management mechanism based on a unified TCI framework is introduced in subsequent communication protocols (for example, R17). Among them, the beam management mechanism based on the unified TCI framework mainly includes the following two technical features.

Technical feature 1: all uplink and downlink channels and beam indications of reference signals are implemented using the unified concept of TCI state.

Technical feature 2: the transmission beams of the terminal-dedicated PDCCH, the terminal-dedicated PDSCH, the terminal-dedicated physical uplink shared channel (PUSCH) and the terminal-dedicated PUCCH are unified into one TCI state. That is, the transmission of these channels always uses a same beam. Accordingly, the network device may use a single beam indication signaling to indicate the unified TCI state used by them.

In some implementations, in the unified TCI framework, the network device may use radio resource control (RRC), MAC CE in combination with downlink control information (DCI) to indicate a joint TCI state or a pair of downlink/uplink TCI states. Figures 2 and 3 show the flow of configuration and indication of the joint TCI state and the flow of configuration and indication of the separate TCI state, respectively.

Referring to FIG. 2, in step S210, the network device may configure a group of TCI states for the terminal device through RRC signaling. For the joint TCI mode, the network device may configure a group of joint TCI states for the terminal device using RRC signaling.

In step S220, the network device activates, by transmitting MAC CE signaling to the terminal device, one or more TCI states from the TCI state group configured by RRC signaling. For the joint TCI mode, the network device may activate K joint TCI states through MAC CE signaling, where K ≤ 8.

In step S230, the network device indicates, by transmitting the DCI to the terminal device, a certain TCI state used for present transmission from K joint TCI states.

Referring to FIG. 3, in step S310, the network device may configure a group of TCI states for the terminal device using RRC signaling. For the separate TCI mode, the network device may configure a group of downlink TCI states and a group of uplink TCI states for the terminal device using RRC signaling.

In step S320, the network device activates, by transmitting MAC CE signaling to the terminal device, one or more TCI states from the TCI state group configured by RRC signaling. For the separate TCI mode, the network device may activate, through MAC CE signaling, K pairs of TCI states: {downlink TCI state, uplink TCI state}, where K ≤ 8.

In step S330, the network device indicates, by transmitting DCI to the terminal device, a certain pair of TCI states used for present transmission from K pairs of TCI states.

In some implementations, the unified TCI states activation/deactivation MAC CE is identified by a media access control (MAC) subheader with enhancement logical channel identification (eLCID). Usually, the MAC header ID has a variable size and includes one or more of the following fields.

Serving cell ID: this field indicates the identity of the serving cell for which the MAC CE applies. The length of this field may be 5 bits. If the indicated serving cell is configured as part of TCI update list 1 (simultaneousU-TCI-UpdateList1), TCI update list 2 (simultaneousU-TCI-UpdateList2), TCI update list 3 (simultaneousU-TCI-UpdateList3), or TCI update list 4 (simultaneousU-TCI-UpdateList4) as specified in TS 38.331 [5], this MAC CE applies to all the serving cells in the simultaneousU-TCI-UpdateList1, simultaneousU-TCI-UpdateList2, simultaneousU-TCI-UpdateList3, or simultaneousU-TCI-UpdateList4, respectively.

Downlink bandwidth part (BWP) ID (DL BWP ID): this field indicates a DL BWP for which the MAC CE applies as the codepoint of the DCI bandwidth part indicator field as specified in TS 38.212 [9]. The length of this field may be 2 bits.

Uplink BWP ID (UL BWP ID): this field indicates a UL BWP for which the MAC CE applies as the codepoint of the DCI bandwidth part indicator field as specified in TS 38.212 [9]. If value of unifiedTCI-StateType in the serving cell indicated by serving cell ID is joint, this field is considered as the reserved bits. The length of the BWP ID field may be 2 bits.

Pi field: this field indicates whether each TCI codepoint corresponds to multiple TCI states or a single TCI state. If the value of this field is set to 1, it indicates that the ith TCI codepoint includes the DL TCI state and the UL TCI state. If the value of this field is set to 0, it indicates that the ith TCI codepoint includes only the DL/joint TCI state or the UL TCI state. The mapping relationship between the codepoint and the TCI state is determined based on the ordinal position of the codepoint among the TCI state IDs.

D/U field: this field indicates whether the TCI state ID in the same octet is for DL/joint TCI state or UL TCI state. If the value of this field is set to 1, the TCI state ID in the same octet is for DL/joint TCI state. If the value of this field is set to 0, the TCI state ID in the same octet is for UL TCI state.

TCI state ID: this field indicates the TCI state, which, for example, may be identified by TCI-stateID as specified in TS 38.331 [5]. If the value of the D/U field is set to 1, the 7-bits length TCI state ID, i.e., TCI-stateId, as specified in TS 38.331 [5] can be used. If the value of the D/U field is set to 0, the most significant bit of the TCI state ID is considered as the reserved bit, and remainder 6 bits indicate the TCI-ul-state-ID as specified in TS 38.331 [5]. Usually, the maximum number of activated TCI states is 16.

R field: this field is a reserved bit, and can usually be set to 0.

At present, the conventional beam selection process includes measuring a beam by a terminal device, and after the measured beam measurement result is sent to the network device, the network device determines whether the terminal device needs to perform beam switching based on the beam measurement result, and finally indicates to the terminal device whether to perform beam switching. This beam switching process requires multiple signaling interactions, which leads to a long time required for beam switching, thus causing beam failure.

Therefore, in view of the above problems, an embodiment of the present application provides a method of wireless communication, in which based on whether a first condition is satisfied, a terminal device can autonomously switch from a serving beam to a target beam without waiting for indication from a network device, which is helpful in reducing high delay caused by information interactions in the beam switching process.

In the embodiments of the present application, the target beam is not limited. For example, the target beam may be one beam. For example, the target beam may be an uplink beam, or the target beam may be a downlink beam. For another example, the target beam may include a pair of beams. For example, the target beam may include a pair of uplink beam and downlink beam.

On the other hand, in the conventional beam switching process, the terminal device periodically reports the beam measurement result. For example, when the reporting period of the beam measurement result is configured to be relatively long, the time required for the beam switching process may be long, thereby resulting in beam failure.

Therefore, in view of the above problems, another embodiment of the present application provides a method of wireless communication, in which the terminal device may autonomously determine whether it is needed to report a beam measurement result based on whether a first condition is satisfied. Compared with the periodic beam measurement result reporting method, it helps to reduce the time required for the beam switching process.

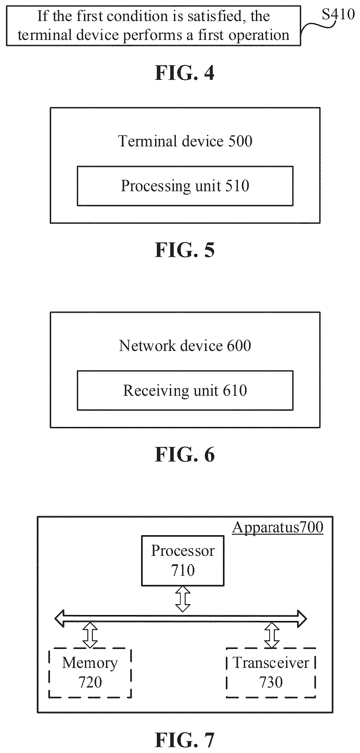

Hereinafter, a method of wireless communication according to an embodiment of the present application will be described with reference to FIG. 4. FIG. 4 is a schematic flowchart of a method of wireless communication according to an embodiment of the present application. The method shown in FIG. 4 includes the step S410.

In step S410, if the first condition is satisfied, the terminal device performs a first operation. The first operation includes one of: switching from the serving beam to the target beam; or sending first information to the network device. The first information includes beam measurement result(s).

In the embodiments of the present application, the beam measurement result is not limited. In some implementations, the beam measurement result may include layer-1 beam measurement result and/or layer-3 beam measurement result. For example, the beam measurement result of a beam may include one or more of the following: reference signal receiving power (RSRP), reference signal receiving quality (RSRQ), signal to interference plus noise ratio (SINR), and block error rate (BLER).

In an embodiment of the present application, the aforementioned beam measurement result(s) is obtained by measuring the beam(s). Here, measuring a beam can be understood as measuring a reference signal associated with the beam. The type of the reference signal is not limited in the embodiments of the present application. The reference signal may include, for example, one or more of the following: synchronization signal/physical broadcast channel block (SSB), PDCCH demodulation reference signal (DMRS), channel state information reference signal (CSI-RS), and the like. Of course, in the embodiment of the present application, the reference signal may be a periodically transmitted reference signal, or the reference signal may be an aperiodically transmitted reference signal.

In some implementations, the first condition is associated with one or more of: a first timer; a first counter, a location of the terminal device, a beam measurement result of the serving beam, a beam measurement result of the target beam, and beam measurement results of beams in the first beam set.

Taking the first condition being associated with the beam measurement result of the target beam as an example, in general, if the beam measurement result of the target beam is good, the terminal device may switch from the serving beam to the target beam. In some implementations, the quality of the beam measurement result of the target beam may be determined based on the first threshold.

For example, if the beam measurement result of the target beam is greater than or equal to the first threshold, it indicates that the beam measurement result of the target beam is good. In this case, the terminal device may switch from the serving beam to the target beam. That is, the first condition may include that the beam measurement result of the target beam is greater than or equal to the first threshold value. Accordingly, if the beam measurement result of the target beam is lower than the first threshold value, it indicates that the beam measurement result of the target beam is poor. In this case, the terminal device may not perform beam switching.

Taking the beam measurement result including the RSRP as an example, if the RSRP of the target beam is greater than or equal to the first threshold, it indicates that the beam measurement result of the target beam is good. In this case, the terminal device may switch from the serving beam to the target beam. If the RSRP of the target beam is lower than the first threshold, it indicates that the beam measurement result of the target beam is poor. In this case, the terminal device may not perform beam switching.

For another example, if the beam measurement result of the target beam is lower than or equal to the first threshold, it indicates that the beam measurement result of the target beam is good. In this case, the terminal device may switch from the serving beam to the target beam. That is, the first condition may include that the beam measurement result of the target beam is lower than or equal to the first threshold. Accordingly, if the beam measurement result of the target beam is greater than the first threshold, it indicates that the beam measurement result of the target beam is poor. In this case, the terminal device may not perform beam switching.

Taking the beam measurement result including the BLER as an example, if the BLER of the target beam is lower than or equal to the first threshold, it indicates that the beam measurement result of the target beam is good. In this case, the terminal device may switch from the serving beam to the target beam. Accordingly, if the BLER of the target beam is greater than the first threshold, it indicates that the beam measurement result of the target beam is poor. In this case, the terminal device may not perform beam switching.

As described above, the beam measurement result of the target beam may include a result of a single beam measurement of the target beam. In an embodiment of the present application, the beam measurement result may include results of multiple beam measurements for the target beam, which is helpful to improve the accuracy of beam switching. Here, the results of multiple beam measurements are obtained based on multiple measurements that are discontinuous in time. Of course, the results of multiple beam measurements may also be obtained based on multiple measurements that are continuous in time.

For example, if the results of multiple beam measurements of the target beam are all greater than or equal to the first threshold, it indicates that the beam measurement result of the target beam is good. In this case, the terminal device may switch from the serving beam to the target beam. That is, the first condition may include that the results of multiple beam measurements of the target beam are all greater than or equal to the first threshold. Accordingly, if the results of multiple beam measurements of the target beam are all lower than the first threshold, it indicates that the beam measurement result of the target beam is poor. In this case, the terminal device may not perform beam switching.

Taking the beam measurement result including the RSRP as an example, if the RSRPs obtained by performing multiple measurements on the target beam are all greater than or equal to the first threshold value, it indicates that the beam measurement result of the target beam is good. In this case, the terminal device may switch from the serving beam to the target beam. If the RSRPs obtained by performing multiple measurements on the target beam are all lower than the first threshold value, it indicates that the beam measurement result of the target beam is poor. In this case, the terminal device may not perform beam switching.

For another example, if the results of multiple beam measurements of the target beam are lower than or equal to the first threshold, it indicates that the beam measurement result of the target beam is good. In this case, the terminal device may switch from the serving beam to the target beam. That is, the first condition may include that the results of multiple beam measurements of the target beam are all lower than or equal to the first threshold. Accordingly, if the results of multiple beam measurements of the target beam are all greater than the first threshold, it indicates that the beam measurement result of the target beam is poor. At this time, the terminal device may not perform beam switching.

Taking the beam measurement result including the BLER as an example, if the BLERs obtained by performing multiple measurements on the target beam are all lower than or equal to the first threshold, it indicates that the beam measurement result of the target beam is good. In this case, the terminal device may switch from the serving beam to the target beam. Accordingly, if the BLERs obtained by performing multiple measurements on the target beam are all greater than the first threshold, it indicates that the beam measurement result of the target beam is poor. In this case, the terminal device may not perform beam switching.

In an embodiment of the present application, the results of multiple beam measurements may be beam measurement results obtained by multiple measurements in a first time period. Accordingly, the first condition may include that the results of multiple beam measurements of the target beam in the first time period are all greater than or equal to the first threshold, or the results of multiple beam measurements of the target beam in the first time period are all lower than the first threshold. The first time period may be predefined, pre-configured or configured by the network device.

It should be noted that the first threshold may be determined based on pre-configured information, or may be determined based on predefined information, or may be determined based on configuration information of the network device, and this is not limited in the embodiments of the present application.

In addition, in an embodiment of the present application, the case of equaling to the first threshold is not limited. For example, if the beam measurement result of the target beam is lower than the first threshold, it may indicate that the quality of the target beam is good. For another example, if the beam measurement result of the serving beam is greater than the first threshold, it may indicate that the quality of the target beam is good.

Taking the first condition being associated with the beam measurement result of the serving beam as an example, in general, if the beam measurement result of the serving beam is poor, the terminal device may switch from the serving beam to the target beam. In some implementations, the quality of the beam measurement result of the serving beam may be determined based on the second threshold.

For example, if the beam measurement result of the serving beam is lower than the second threshold, it indicates that the beam measurement result of the serving beam is poor. In this case, the terminal device may switch from the serving beam to the target beam. That is, the first condition may include that the beam measurement result of the serving beam is lower than the second threshold. Accordingly, if the beam measurement result of the serving beam is greater than or equal to the second threshold, it indicates that the beam measurement result of the serving beam is good. In this case, the terminal device may not perform beam switching.

Taking the beam measurement result including the RSRP as an example, if the RSRP of the serving beam is lower than the second threshold, it indicates that the beam measurement result of the serving beam is poor. In this case, the terminal device may switch from the serving beam to the target beam. If the RSRP of the serving beam is greater than or equal to the second threshold, it indicates that the beam measurement result of the serving beam is good. In this case, the terminal device may not perform beam switching.

For another example, if the beam measurement result of the serving beam is greater than the second threshold, it indicates that the beam measurement result of the serving beam is poor. In this case, the terminal device may switch from the serving beam to the target beam. That is, the first condition may include that the beam measurement result of the serving beam is greater than the second threshold. Accordingly, if the beam measurement result of the serving beam is lower than or equal to the second threshold, it indicates that the beam measurement result of the serving beam is good. In this case, the terminal device may not perform beam switching.

Taking the beam measurement result including the BLER as an example, if the BLER of the serving beam is greater than the second threshold, it indicates that the beam measurement result of the serving beam is poor. In this case, the terminal device may switch from the serving beam to the target beam. Accordingly, if the BLER of the serving beam is lower than or equal to the second threshold, it indicates that the beam measurement result of the serving beam is good. In this case, the terminal device may not perform beam switching.

As described above, the beam measurement result of the serving beam may include a result of a single beam measurement of the serving beam. In an embodiment of the present application, the measurement result may include results of multiple beam measurements for the serving beam, which is helpful to improve the accuracy of beam switching. Here, the result of multiple beam measurements are obtained based on multiple measurements that are discontinuous in time. Of course, the results of multiple beam measurements may also be obtained based on multiple measurements that are continuous in time.

For example, if the results of multiple beam measurements of the serving beam are all lower than the second threshold, the beam measurement result of the serving beam is poor. In this case, the terminal device may switch from the serving beam to the target beam. That is, the first condition may include that the results of multiple beam measurements of the serving beam are all lower than the second threshold. Accordingly, if the results of multiple beam measurements of the serving beam are all greater than or equal to the second threshold value, it indicates that the beam measurement result of the serving beam is good. In this case, the terminal device may not perform beam switching.

Taking the beam measurement result including the RSRP as an example, if the RSRPs obtained by performing multiple measurements on the serving beam are all lower than the second threshold, it indicates that the beam measurement result of the serving beam is poor. In this case, the terminal device may switch from the serving beam to the target beam. If the RSRPs obtained by performing multiple measurements on the serving beam are all greater than or equal to the second threshold, it indicates that the beam measurement result of the serving beam is good. In this case, the terminal device may not perform beam switching.

For another example, if the results of multiple beam measurements of the serving beam are all greater than the second threshold, it indicates that the beam measurement result of the serving beam is poor. In this case, the terminal device may switch from the serving beam to the target beam. That is, the first condition may include that the results of multiple beam measurements of the serving beam are all greater than the second threshold. Accordingly, if the results of multiple beam measurements of the serving beam are all lower than or equal to the second threshold, it indicates that the beam measurement result of the serving beam is good. In this case, the terminal device may not perform beam switching.

Taking the beam measurement result including the BLER as an example, if the BLERs obtained by performing multiple measurements on the serving beam are all greater than the second threshold, it indicates that the beam measurement result of the serving beam is poor. In this case, the terminal device may switch from the serving beam to the target beam. Accordingly, if the BLERs obtained by performing multiple measurements on the serving beam are all lower than or equal to the second threshold, it indicates that the beam measurement result of the serving beam is good. In this case, the terminal device may not perform beam switching.

In an embodiment of the present application, the results of multiple beam measurement results may be beam measurement results obtained by multiple measurements in a first time period. Accordingly, the first condition may include that the results of multiple beam measurements of the serving beam in the first time period are all greater than or equal to the second threshold, or the results of multiple beam measurements of the serving beam in the first time period are all lower than the second threshold. The first time period may be predefined, pre-configured or configured by the network device.

It should be noted that the second threshold may be determined based on preconfigured information, or may be determined based on predefined information, or may be determined based on configuration information of the network device, and this is not limited in the embodiments of the present application.

In addition, in an embodiment of the present application, the case of equaling to the second threshold is not limited. For example, if the beam measurement result of the serving beam is lower than or equal to the second threshold, it may indicate that the quality of the serving beam is poor. For another example, if the beam measurement result of the serving beam is greater than or equal to the second threshold, it may indicate that the quality of the serving beam is poor.

Taking the first condition being associated with the beam measurement result of the serving beam and the beam measurement result of the target serving beam as an example, generally, if the beam measurement result of the target beam is better than (or higher than) the beam measurement result of the serving beam, the terminal device may switch from the serving beam to the target beam. In some implementations, the extent to which the beam measurement result of the target beam is better than the measurement result of the serving beam may be determined based on the third threshold.

In an embodiment of the present application, the difference between the beam measurement result of the target beam and the beam measurement result of the serving beam may be determined based on the difference value obtained by subtracting the beam measurement result of the serving beam from the beam measurement result of the target beam, or may be determined based on the difference value obtained by subtracting the beam measurement result of the target beam from the beam measurement result including the serving beam.

For example, if the beam measurement result of the target beam is better than the beam measurement result of the serving beam, and the difference between the beam measurement result of the target beam and the beam measurement result of the serving beam is greater than or equal to the third threshold, it indicates that the beam measurement result of the target beam is significantly better than the beam measurement result of the serving beam. In this case, the terminal device may switch from the serving beam to the target beam. That is, the first condition may include that the beam measurement result of the target beam is better than the beam measurement result of the serving beam, and the difference between the beam measurement result of the target beam and the beam measurement result of the serving beam is greater than or equal to the third threshold. Accordingly, if the difference between the beam measurement result of the target beam and the beam measurement result of the serving beam is lower than the third threshold, it indicates that the beam measurement result of the target beam is slightly better than the beam measurement result of the serving beam, or that the difference between the beam measurement result of the target beam and the beam measurement result of the serving beam is not great. In this case, the terminal device may not perform beam switching.

Taking the beam measurement result including the RSRP as an example, if the difference value obtained by subtracting the RSRP of the serving beam from the RSRP of the target beam is greater than or equal to the third threshold, it indicates that the beam measurement result of the target beam is significantly better than the beam measurement result of the serving beam. In this case, the terminal device may switch from the serving beam to the target beam. If the difference value obtained by subtracting the RSRP of the serving beam from the RSRP of the target beam is lower than the third threshold, it indicates that the difference between the beam measurement result of the target beam and the beam measurement result of the serving beam is not great. In this case, the terminal device may not perform beam switching.

Taking the beam measurement result including the BLER as an example, if the difference value obtained by subtracting the BLER of the target beam from the BLER of the serving beam is greater than or equal to the third threshold, it indicates that the beam measurement result of the target beam is significantly better than the beam measurement result of the serving beam. In this case, the terminal device may switch from the serving beam to the target beam. Accordingly, if the difference value obtained by subtracting the BLER of the target beam from the BLER of the serving beam is lower than the third threshold value, it indicates that the difference between the beam measurement result of the target beam and the beam measurement result of the serving beam is not great. In this case, the terminal device may not perform beam switching.

It should be noted that the third threshold may be determined based on preconfigured information, or may be determined based on predefined information, or may be determined based on configuration information of the network device, and this is not limited in the embodiments of the present application.

In addition, in an embodiment of the present application, the case of equaling to the third threshold is not limited. For example, if the beam measurement result of the target beam is greater than the third threshold, it may indicate that the quality of the target beam is good. Accordingly, if the difference between the beam measurement result of the target beam and the beam measurement result of the serving beam is equal to the third threshold, it indicates that the difference between the beam measurement result of the target beam and the beam measurement result of the serving beam is not great.

As described above, the difference between the beam measurement result of the target beam and the beam measurement result of the serving beam may include a result of a single beam measurement of the target beam and the serving beam. In an embodiment of the present application, the above difference may also include results of multiple beam measurements for the target beam and the serving beam, which is helpful to improve the accuracy of beam switching. Here, the results of multiple beam measurements are obtained based on multiple measurements that are discontinuous in time. Of course, the results of multiple beam measurements may also be obtained based on multiple measurements that are continuous in time.

Taking the first condition being associated with beam measurement results of beams in the first beam set as an example, in some implementations, the first beam set may include a serving beam and/or a target beam.

In an embodiment of the present application, the first beam set is not limited. For example, the first beam set may be a beam set corresponding to a TCI state list configured by the network device. For another example, the first beam set may be a beam set corresponding to spatial relation information configured by the network device, or the first beam set may be associated with spatial relation information configured by the network device. For another example, the first beam set may be associated with SSB configured by the network device. For another example, the first beam set may be associated with SRS configured by the network device. For another example, the first beam set may be associated with CSI-RS configured by the network device. For another example, the first beam set may be associated with candidate beams, or the first beam set may include candidate beams associated with the beam switching. For another example, the first beam set may be associated with candidate reference signal (candidate RS). For another example, the first beam set may include only beams activated by the network device. Assuming that the network device configures 128 TCI states for the terminal device, and a part of the TCI states are activated by the MAC CE, in this case, the first beam set may include beams associated with the activated TCI states, or the terminal device may measure only beams associated with the activated TCI states.

Hereinafter, a first condition associated with beam measurement results in the first beam set in the embodiments of the present application is described with reference to Examples 1 to 4.

In Example 1, the first condition may include that the number of first beam(s) in the first beam set is greater than a fourth threshold. Here, the first beam(s) may be beam(s) having good beam measurement result(s) in the first beam set, that is, if the number of first beam(s) having good beam measurement result(s) in the first beam set is greater than the fourth threshold, the terminal device may switch from the serving beam to the target beam in the first beam set.

In some implementations, first beam(s) of the first beam set may be determined based on a fifth threshold. For example, the first beam(s) is beam(s) in the first beam set whose beam measurement result(s) is greater than or equal to a fifth threshold. Taking the beam measurement result including RSRP as an example, the first beam(s) may be beam(s), of which the RSRP(s) is greater than or equal to the fifth threshold, in the first beam set. For another example, the first beam(s) is beam(s) of which the beam measurement result(s) of the first beam set is lower than or equal to the fifth threshold. Taking the beam measurement result including BLER as an example, the first beam(s) may be beam(s), of which the BLER(s) is lower than or equal to the fifth threshold, in the first beam set.

In some implementations, the first beam set may be associated with one cell. As described above, performing beam switching based on the first condition helps to allow the first beam set to which the terminal device switches includes a relatively large number of first beams, and then the terminal device selects a first beam in the first beam set as the target beam for beam switching, or the terminal device selects a first beam in the cell in which the first beam set is located as the target beam for beam switching, which helps to avoid frequent cell switching due to the terminal device being unable to determine an appropriate target beam for switching in the current cell.

Example 2, the first condition may include that an average beam measurement result of the beams in the first beam set is good. In some implementations, the average beam measurement of the first beam set may be determined based on the sixth threshold.

For example, the above mentioned first condition may include that the average beam measurement result of the first beam set is greater than or equal to the sixth threshold. Taking the beam measurement result including RSRP as an example, if the average RSRP of the beams in the first beam set is greater than or equal to the sixth threshold, the terminal device may switch to the target beam in the first beam set.

For another example, the above mentioned first condition may include that the average beam measurement result of the first beam set is lower than or equal to the sixth threshold. Taking the beam measurement result including BLER as an example, if the average BLER of the beams in the first beam set is lower than or equal to the sixth threshold, the terminal device may switch to the target beam in the first beam set.

Example 3, in the first order associated with the first beam set, the serving beam is located after the optimal N beams, and the first order is to sort the beams in the first beam set in a descending order beam measurement results. N is a positive integer.

That is, if the ordering of the beams in the first beam set (that is, the first order) changes, causing the beam measurement result of the serving beam to drop out of the top N beams, that is, the beam measurement result of the serving beam is no longer the top N beams with better beam quality in the first beam set, the terminal device may switch from the serving beam to the target beam. The target beam may be one of the top N beams with better beam measurement result in the first beam set, or the target beam may be any one beam, whose beam measurement result is better the beam measurement results of the serving beam, in the first beam set.

Example 4, an optimal beam in the first beam set is not a serving beam.

The optimal beam described above may be a beam having the best beam measurement result in the first beam set. Taking the measurement result including RSRP as an example, the optimal beam may be a beam associated with the maximum value among the RSRPs of various beams in the first beam set. Taking the measurement result including BLER as an example, the optimal beam may be a beam associated with the minimum value among the BLERs of various beams in the first beam set.

Taking the first condition being associated with the first timer as an example, the first condition includes the expiration of the first timer. That is, in response to the expiration of the first timer, the terminal device switches from the serving beam to the target beam.

In some implementations, the first timer is used to record the time length that the terminal device uses the beam, or the first timer is used to periodically instruct the terminal device to perform beam switching.

Taking the first timer being used to record the time length that the terminal device uses the serving beam as an example, the starting condition of the first timer may comprise a start time of use of the serving beam by the terminal device, or the method further comprises starting the first timer in response to using the serving beam by the terminal device.

In some implementations, if the terminal device switches from the target beam to another beam, the terminal device may restart the first timer and continue to perform beam switching upon the expiration of the first timer.

Taking the first condition being associated with the position of the terminal device as an example, different positions may have corresponding beams, that is, when the terminal device moves to the target position, the terminal device may switch from the serving beam to the target beam. The target beam corresponds to the target position.

In the embodiments of the present application, the realization of the position of the terminal device is not limited. In some implementations, the position of the terminal device may be represented by position coordinates of the terminal device. In this case, different position coordinates may be associated with one or more beams.

In some implementations, the position of the terminal device may be represented by a region in which the terminal device is located. In this case, different regions may be associated with one or more beams.

In some implementations, the position of the terminal device may be represented by a distance between the position of the terminal device and a reference position. Different distances may be associated with one or more beams. In addition, the reference position is not specifically limited in the embodiments of the present application. For example, the reference position may be a previous moving position of the terminal device. For another example, the reference position may be a position of the network device. For another example, the reference position may be a position of another terminal device.

It should be noted that, the correspondence relationship between the positions and the beams may include that one position corresponds to one beam, or one position is associated with a plurality of beams. Further, the beams corresponding to different positions may be the same or different. If the beams corresponding to different positions are different, the beams corresponding to different positions may be completely different, or the beams corresponding to different positions may not be completely the same.

Taking the first condition being associated with a first counter as an example, the first counter is used to indicate the number of measurements performed on the target beam and/or the serving beam. Taking the first counter being associated with the number of measurements of the target beam as an example, the first condition may include that the number of measurements performed on the target beam reaches the number of measurements indicated by the counter, or that if the value of the first counter is set to M, the first condition may include that the number of measurements of the target beam reaches M, and the value of M may be a positive integer.

In an embodiment of the present application, the above first condition associated with the first counter may be combined with any of the first conditions described above. In some implementations, the first condition may be associated with a first counter and a measurement result of the target beam. That is, the first condition may include that the number of measurements performed on the target beam reaches M, and the beam measurement result of the target beam subjected to the M measurements is good.

For example, if the results of the M beam measurements of the target beam are all greater than or equal to the first threshold, it indicates that the beam measurement result of the target beam is good. In this case, the terminal device may switch from the serving beam to the target beam. That is, the first condition may include that the results of M beam measurements of the target beam are all greater than or equal to the first threshold. Accordingly, if the results of M beam measurements of the target beam are all lower than the first threshold, it indicates that the beam measurement result of the target beam is poor. In this case, the terminal device may not perform beam switching.

Taking the beam measurement result including RSRP as an example, if the RSRPs obtained by performing M measurements on the target beam are all greater than or equal to the first threshold, it indicates that the beam measurement result of the target beam is good. In this case, the terminal device may switch from the serving beam to the target beam. If the RSRPs obtained by performing M measurements on the target beam is lower than the first threshold, it indicates that the beam measurement result of the target beam is poor. In this case, the terminal device may not perform beam switching.

For another example, if the results of M beam measurements of the target beam are all lower than or equal to the first threshold, it indicates that the beam measurement result of the target beam is good. In this case, the terminal device may switch from the serving beam to the target beam. That is, the first condition may include that results of M beam measurement of the target beam are all lower than or equal to the first threshold. Accordingly, if the results of M beam measurements of the target beam are all greater than the first threshold, it indicates that the beam measurement result of the target beam is poor. In this case, the terminal device may not perform beam switching.

Taking the beam measurement result including BLER as an example, if the BLERs obtained by performing M measurements on the target beam is lower than or equal to the first threshold, it indicates that the beam measurement result of the target beam is good. In this case, the terminal device may switch from the serving beam to the target beam. Accordingly, if the BLERs obtained by performing M measurements on the target beam are all greater than the first threshold, it indicates that the beam measurement result of the target beam is poor. In this case, the terminal device may not perform beam switching.

In an embodiment of the present application, the above mentioned results of M beam measurements may be beam measurement results obtained by multiple measurements in a first time period, and accordingly, the first condition may include that the results of M beam measurements of the target beam in the first time period are all greater than or equal to the first threshold, or the results of M beam measurements of the target beam in the first time period are all lower than the first threshold. Here, the first time period may be predefined, preconfigured or configured by the network device.

Taking the first counter being associated with the number of measurements of the serving beam as an example, the first condition may include that the number of measurements performed on the serving beam reaches the number of measurements indicated by the counter, or that if the value of the first counter is set to X, the first condition may include that the number of measurements of the serving beam reaches X. The value of X is a positive integer.

In some implementations, the first condition may be associated with the first counter and the measurement result of the serving beam. That is, the first condition may include that the number of measurements performed on the target beam reaches X, and the beam measurement result of the serving beam subjected to X times of measurement is poor.

For example, if the results of X beam measurements of the serving beam are all lower than the second threshold, it indicates that the beam measurement result of the serving beam is poor. In this case, the terminal device may switch from the serving beam to the target beam. That is, the first condition may include that the results of X beam measurements of the serving beam are all lower than the second threshold. Accordingly, if the results of X beam measurements of the serving beam are all greater than or equal to the second threshold, it indicates that the beam measurement result of the serving beam is good. In this case, the terminal device may not perform beam switching.

Taking the beam measurement result including RSRP as an example, if the RSRPs obtained by X measurements performed on the serving beam are all lower than the second threshold, it indicates that the beam measurement result of the serving beam is poor. In this case, the terminal device may switch from the serving beam to the target beam. If the RSRPs obtained by X measurements performed on the serving beam is greater than or equal to the second threshold, it indicates that the beam measurement result of the serving beam is good. In this case, the terminal device may not perform beam switching.

For another example, if results of the X beam measurements of the serving beam are all greater than the second threshold, it indicates that the beam measurement result of the serving beam is poor. In this case, the terminal device may switch from the serving beam to the target beam. That is, the first condition may include that the results of X beam measurements of the serving beam are all greater than the second threshold. Accordingly, if the results of X beam measurements of the serving beam are all lower than or equal to the second threshold, it indicates that the beam measurement result of the serving beam is good, and in this case, the terminal device may not perform beam switching.

Taking the beam measurement result including the BLER as an example, if the BLERs obtained by X measurements performed on the serving beam are all greater than the second threshold, it indicates that the beam measurement result of the serving beam is poor. In this case, the terminal device may switch from the serving beam to the target beam. Accordingly, if the BLERs obtained by X measurements performed on the serving beam are all lower than or equal to the second threshold, it indicates that the beam measurement result of the serving beam is good. In this case, the terminal device may not perform beam switching.

In an embodiment of the present application, the above mentioned results of X beam measurements may be beam measurement results obtained by multiple measurements in a first time period, and accordingly, the first condition may include that the results of X beam measurements of the serving beam in the first time period are all greater than or equal to the second threshold, or the results of X beam measurements of the serving beam in the first time period are all lower than the second threshold. The first time period may be predefined, preconfigured or configured by the network device.

In addition, the first threshold and/or the second threshold in the embodiments of the present application may be referred to the description above, and the embodiments of the present application are not limited thereto.

The first condition in the embodiments of the present application has been described above, and the first operation in the embodiments of the present application will be described below in conjunction with the implementations 1 to 3.

Implementation 1: the first operation includes switching from a serving beam to a target beam.

In some implementations, the terminal device may communicate based on the target beam at the first time, or after the terminal device switches to the target beam, the terminal device may communicate using the target beam at the first time. Here, the first time may be a specified time. For example, the first time may be the y-th symbol in the slot Y. Accordingly, the terminal device may communicate based on the target beam at the y-th symbol in the slot Y. Here, the slot Y may be a slot corresponding to a time at which the terminal device determines that the first condition is satisfied. Of course, the slot Y may be a slot after the time at which the terminal device determines that the first condition is satisfied (for example, the slot Y may be the Y-th slot after the first condition is satisfied), or the slot Y may be a slot corresponding to a switching time at which the terminal device switches to the target device. Of course, the slot Y may be a slot after the above switching time, which is not limited in the embodiments of the present application.

Of course, in an embodiment of the present application, if the terminal device switches from the serving beam to the target beam, the terminal device may immediately use the target beam. In other words, if the first condition is satisfied, the terminal device may switch from the serving beam to the target beam and immediately use the target beam.

In some implementations, before step S410, the method further includes: the terminal device sends first indication information to the network device, the first indication information being used to indicate that the terminal device switches from the serving beam to the target beam, or the first indication information being used to indicate that the terminal device communicates using the target beam.

In some implementations, the above first indication information may be used to indicate one or more of the following information of the target beam: a cell to which the target beam is associated, a BWP to which the target beam is associated, a target beam type (e.g., a transmit beam or a receive beam), a channel to which the target beam is associated, a TCI framework (including a unified TCI state framework or a non-unified TCI state framework) to which the target beam belongs, the target beam is a downlink beam, the target beam is an uplink beam, the target beam is shared by uplink and downlink, the type of TCI state to which the target beam is associated (where the type of TCI state may include a joint TCI state and a separate TCI state).

In some implementations, the above first indication information may be indicated by explicit signaling. For example, the first indication information may be carried on one or more of the following: MAC CE, UCI, RRC message.

In some scenarios, if the terminal device determines the target beam, before the terminal device sends the first indication information, or before the network device configures resources used to send the first indication information for the terminal device, there may be a case that the beam measurement result of the target beam decreases. In this case, the terminal device may not communicate based on the target beam. Optionally, the terminal device may no longer send the first indication information. Of course, in an embodiment of the present application, if the beam measurement result of the target beam decreases, the terminal device may perform communication based on the target beam.

In other implementations, the above first indication information may be implicitly indicated. That is, the first indication information may be associated with a target resource (for example, a configured grant (CG) resource or an SRS configuration). In this case, if communication is performed based on the target resource, it may indicate that the first indicated information is indirectly transmitted. The target resource may be preconfigured, predefined, or indicated by the network device. In addition, the above mentioned communication based on the target resource may include reporting the beam measurement result based on the target resource, sending other information based on the target resource, or the like.

Assuming that the network device configures a plurality of groups of resources for the terminal device, different resources in the plurality of groups of resources may be associated with different beams. Accordingly, if the terminal device reports the beam measurement result using the target resource in the plurality of groups of resources, the beam measurement result is further used to indicate that the target beam is a beam associated with the target resource.

Taking the target resource including SRS configuration as an example, the SRS configuration may be configured based on each beam. Therefore, different SRS configurations may be associated with one beam.

As described above, if the terminal device determines to switch to the target beam, the terminal device needs to wait for the target resource corresponding to the target beam so as to subsequently perform communication based on the target resource to indirectly indicate the target beam. However, in some scenarios, when the terminal device waits for the target beam, the beam measurement result of the target beam may decreases, and in this case, the terminal device may no longer use the target beam for communication. Alternatively, if the terminal device obtains the target resource through waiting, the terminal device, in this case, may no longer perform communication based on the target resource. Alternatively, the terminal device may continue to communicate based on the target resource, but no longer indirectly indicate the first indication information based on the target resource. Of course, in an embodiment of the present application, if the beam measurement result of the target beam decreases, the terminal device may perform communication based on the target beam.

In some implementations, the method further includes: in response to sending the first indication information, the terminal device communicates using the target beam. That is, after the terminal device sends the first indication information, the terminal device may immediately perform communication using the target beam. Of course, in an embodiment of the present application, after transmitting the first indication information, the network device may send a first response message for the first indication information to the terminal device. In this case, the terminal device may communicate using the target beam after receiving the first response message.

That is, the method further includes: the terminal device receives a first response message for the first indication information sent by the network device. In response to receiving the first response message, the terminal device communicates based on the target beam.

In some implementations, the first response message is used to indicate that the terminal device is allowed to switch to the target beam. In other implementations, the first response message is used to indicates that the network device confirms that the terminal device switches to the target beam, or the first response message is used to indicate that the network device determines that the terminal device uses the target beam to communicate, or the first response message is used to indicate that the network device has received the first indication information.

In some implementations, the first response message described above may be indicated by explicit signaling. For example, the first response message may be ACK information. For another example, the first response message may be carried on one or more of the following: MAC CE, DCI.

As described above, after the terminal device receives the first response message, the terminal device may perform communication using the target beam. In some cases, before the network device sends the first response message to the terminal device, the beam measurement result of the target beam may decrease, after which the terminal device may no longer communicate using the target beam even if the terminal device receives the first response message. Of course, in an embodiment of the present application, if the beam measurement result of the target beam decreases, the terminal device may perform communication based on the target beam.

In other implementations, the above mentioned first response message may be implicitly indicated. That is, the first response message may be determined based on new transmission schedule or retransmission schedule. For example, after sending the first instruction information, if the terminal device receives scheduling information for scheduling new transmission data (initial transmission data), in this case, the scheduling information is used to indicate that the network device has received the first indication information. Accordingly, the terminal device may perform communication based on the target beam. The new transmission data is the same as the HARQ process to which the first indication information belongs. After sending the first instruction information, if the terminal device receives scheduling information for scheduling retransmission data, in this case, the scheduling information is used to indicate that the network device has not received the first indication information, and accordingly, the terminal device cannot perform communication based on the target beam.

As described above, if the first response message is implicitly indicated, in some scenarios, the beam measurement result of the target beam may decrease when the terminal device does not receive the first response information, and in this case, even if the terminal device obtains the first response message sent based on an implicitly manner, the terminal device may communicate without using the target beam. For example, if the terminal device receives scheduling information for scheduling new transmission data (initial transmission data) after sending the first indication information, in this case, the scheduling information is used to indicate that the network devices has received the first indication information. However, in this case, if the terminal device determines that the beam measurement result of the target beam is decreased, the terminal device may not perform communication based on the target beam. The new transmission data is the same as the HARQ process to which the first indication information belongs. Of course, in an embodiment of the present application, if the beam measurement result of the target beam decreases, the terminal device may perform communication based on the target beam.

In some implementations, the terminal device may transmit capability information to the network device to indicate whether the terminal device supports beam switching based on the first condition. Of course, in an embodiment of the present application, whether or not the terminal device supports beam switching based on the first condition may be configured by the network device.

Implementation 2: The first operation may include switching from the first beam set to the second beam set.

In some implementations, the first beam set and the second beam set may be different beam sets, and accordingly, the beams included in the first beam set are partially or all different from the beams included in the second beam set. The first beam set may include a serving beam. In addition, the introduction of the first beam set may be referred to the description above, and for the sake of brevity, the description will not be repeated here.

In an embodiment of the present application, if the terminal device switches to the second beam set, the terminal device may select a target beam in the second beam set. Here, the beam switching method when the terminal device selects the target beam in the second beam set may be referred to the above description with respect to implementation 1. Of course, in an embodiment of the present application, the terminal device may also adopt a conventional beam switching method to select the target beam in the second beam set.

In some implementations, if the beam measurement results of the beams in the first beam set are poor, the terminal device may switch from the first beam set to the second beam set.

In an embodiment of the present application, the method of determining that the beam measurement results of the beams in the first beam set are poor is not limited. In some implementations, the beam measurement result of the first beam set may be determined based on the measurement result of each beam in the first beam set. Here, the method of determining the beam measurement result of each beam in the first beam set may be similar to the above mentioned method of determining the beam measurement result of the serving beam, that is, the above mentioned serving beam may be replaced with the beams in the first beam set. For the sake of brevity, it will not be repeated here.

In other implementations, the beam measurement result of the first beam set may also be determined by considering the first beam set as a whole. For example, if the average beam measurement result of the beams in the first beam set is poor, the terminal device may switch from the first beam set to the second beam set. For another example, if the number of beams having poor beam measurement results in the beams in the first beam set is greater than a threshold, the terminal device may switch from the first beam set to the second beam set. For another example, if the number of beams having good beam measurement results in the beams in the first beam set is lower than the threshold v, the terminal device may switch from the first beam set to the second beam set.

Implementation 3: the first operation includes sending first information to the network device.

In some implementations, the first information includes one or more of: a serving cell identity, a Bandwidth part (BWP) identifier, a control resource set (CORESET) identifier, indication information for requesting beam switching, information of a target beam suggested by the terminal device, a beam measurement result of at least one beam in the first the first beam set, or a beam measurement result of the serving beam.

Taking the first information including the beam measurement result of the serving beam as an example, it is helpful for the network device to determine, based on the beam measurement result of the serving beam, whether to instruct the terminal device to perform beam switching. The beam measurement result of the serving beam may be referred to the above description with respect to the beam measurement result, and will not be repeated here for the sake of brevity.

Taking the first information including indication information for requesting beam switching as an example, the indication information for requesting beam switching may be represented by one bit to reduce the overhead required for transmitting the information. For example, if the value of this bit is 1, it indicates that the terminal device requests beam switching. On the contrary, if the value of this bit is 0, it indicates that the terminal device does not request beam switching. For another example, if the value of this bit is 0, it indicates that the terminal device requests beam switching. On the contrary, if the value of this bit is 1, it indicates that the terminal device does not request beam switching.

Taking the first information including a beam measurement result of at least one beam in the first beam set as an example, the first beam set and/or the beam measurement result may be referred to the above description.

Taking the first information including information of a target beam suggested by the terminal device as an example, in some implementations, the information of the suggested target beam includes one or more of the following: a quasi co-location (QCL) type associated with the suggested target beam, an identifier of the suggested target beam, a cell associated with the suggested target beam, the BWP of the suggested target beam, a beam type of the suggested target beam, a channel associated with the suggested target beam, a TCI framework to which the suggested target beam belongs, a TCI state type associated with the suggested target beam, the number of TCI state(s) associated with the suggested target beam.

The QCL type associated with the suggested target beam may include one of: QCL type A, QCL type B, QCL type C, and QCL type D.

The beam type of the suggested target beam may include transmit beam and receive beam.

The channel associated with the suggested target beam may include one or more of the following: PDCCH, PDSCH, PUCCH, PUSCH, PBCH.

The TCI framework to which the suggested target beam belongs may include a unified TCI state framework or a non-unified TCI state framework.

The suggested TCI state types for the target beam association may include a joint TCI state and a separate TCI state.

The number of TCI state(s) associated with the suggested target beam. For example, the number of TCI state(s) associated with the suggested target beam may be 1. For another example, the number of TCI state(s) associated with the suggested target beam may be multiple.

In some implementations, the above suggested target beam may be indicated by explicit signaling. For example, the suggested target beam may be carried on one or more of the following: MAC CE, UCI, RRC message.

In other implementations, the above suggested target beam may be indicated implicitly. That is, the suggested target beam may be associated with a target resource (for example, a CG resource or an SRS configuration). In this case, if communication is performed based on the target resource, it may represent that the suggested target beam is indicated indirectly. The target resource may be preconfigured, predefined, or indicated by the network device.

In some implementations, the method further includes: the network device sends second indication information to the terminal device, and the second indication information is used to indicate whether the terminal device is allowed to perform beam switching, and/or the second indication information carries information of the target beam.

In some implementations, the second indication information may be information indicating/activating TCI state(s) associated with the target beam. For example, the second indication information may be a unified TCI state activation/deactivation MAC CE. For another example, the second indication information may be a DCI of format 1 _ 1 or 1 _ 2. For another example, the second indication information may be a TCI state Indication for UE-specific PDCCH MAC CE. For another example, the second indication information may be TCI States activation/deactivation for UE-specific PDSCH MAC CE. For another example, the second indication information may be a serving cell set based SRS TCI state indication MAC CE. For another example, the second indication information may be a SP/AP SRS TCI state indication MAC CE. For another example, the second indication information may be an enhanced TCI states activation/deactivation for UE-specific PDSCH MAC CE. Of course, in an embodiment of the present application, the above MAC CE may be a newly introduced MAC CE in a future communication system. Further, the above DCI may be a DCI newly introduced in a future communication system.

In some implementations, the method further includes: the terminal device sends a second response message for the second indication information to the network device. The second response message includes one or more of: new transmission scheduling information of the target HARQ process, information to indicate whether the terminal device communicates based on the target beam, or information of a beam used by the terminal device.

In some implementations, the target HARQ process is a HARQ process of the first information. Accordingly, if the second response message includes new transmission scheduling information of the target HARQ process, it indicates that the terminal device has successfully received the second indication information. Accordingly, if the second response message includes retransmission scheduling information of the target HARQ process, it indicates that the terminal device fails to successfully receive the second indication information.

In some implementations, the information of the beam used by the terminal device indicated in the second response message may be information of the target beam. In some scenarios, when the network device and the terminal device interact with each other, the beam measurement result of the target beam may degrade. In this case, the terminal device may select another beam for communication. Therefore, the information of the beam used by the terminal device indicated in the second response message may be the information of another beam.

In some implementations, before the terminal device performs the first operation, the serving beam and/or the target beam belong to the first beam set, and the method further includes: the terminal device receives configuration information sent by the network device, and the configuration information is used to configure the first beam set.

In some implementations, the configuration information includes one or more of: TCI state(s) associated with the first beam set, spatial relation information associated with the first beam set, reference signal information associated with the first beam set, candidate beam information in a first beam set, or candidate reference signal information associated with the first beam set.

In addition, in an embodiment of the present application, performing measurement on the beam may be replaced by tracking the beam, monitoring the beam, etc. Of cause, performing measurement on the beam may be replaced by other terms having similar meanings. The embodiments of the present application are not limited thereto.

Embodiments of the method of the present application are described in detail above with reference to FIGs. 1 to 4, and embodiments of the device of the present application are described in detail below with reference to FIGs. 5 to 7. It should be understood that the description of the method embodiments and the description of the device embodiments correspond to each other. Therefore, the portions not described in detail can be referred to the foregoing method embodiments.

FIG. 5 is a schematic diagram of a terminal device according to an embodiment of the present application, and the terminal device 500 shown in FIG. 5 includes a processing unit 510.

When the first condition is satisfied, the processing unit 510 is configured to perform a first operation. The first operation comprises one of: switching from a serving beam to a target beam, or sending first information to the network device, the first information comprising beam measurement result(s).

In some implementations, the first condition is associated with one or more of: a first timer; a location of the terminal device; a beam measurement result of the serving beam; a beam measurement result of the target beam; a first counter, the first counter being configured to indicate a number of measurements performed on the target beam and/or the serving beam; or beam measurement results of beams in a first beam set. The first beam set comprises the target beam and/or the serving beam.

In some implementations, when the first condition is associated with the beam measurement result of the target beam, the first condition comprises that the beam measurement result of the target beam is greater than a first threshold, or the first condition comprises that the beam measurement result of the target beam is lower than a first threshold.

In some implementations, when the first condition is associated with a beam measurement result of the serving beam, the first condition comprises that the beam measurement result of the serving beam is lower than or equal to a second threshold, or that the beam measurement result of the serving beam is lower than or equal to a second threshold.

In some implementations, when the first condition is associated with the beam measurement result of the serving beam and the beam measurement result of the target serving beam, the first condition comprises that the beam measurement result of the target beam is higher than the beam measurement result of the serving beam, and a difference between the beam measurement result of the target beam and the beam measurement result of the serving beam is greater than a third threshold, or a difference between the beam measurement result of the target beam and the beam measurement result of the serving beam is lower than or equal to a third threshold.

In some implementations, when the first condition is associated with the beam measurement results of beams in the first beam set, the first condition comprises one or more of: the number of first beam(s) in the first beam set is greater than a fourth threshold; an average beam measurement result of the beams in the first beam set is greater than or equal to a sixth threshold; an average beam measurement result of the beams in the first beam set is lower than a sixth threshold; in a first order associated with the first beam set, the serving beam is located after optimal N beams, and the first order is to sort the beams in the first beam set in a descending order of beam measurement results; or an optimal beam in the first beam set is not the serving beam. The first beam(s) is beam(s), in the first beam set, of which beam measurement result(s) is greater than or equal to a fifth threshold, or the first beam(s) is beam(s), in the first beam set, of which beam measurement result(s) is lower than a fifth threshold

In some implementations, when the first condition is associated with the first timer, the first condition comprises expiration of the first timer.

In some implementations, when the first operation comprises switching from the serving beam to the target beam, the processing unit is configured to communicate based on the target beam at a first time, the first time being predefined.

In some implementations, when the first operation comprises switching from the serving beam to the target beam, the terminal device further comprises a first sending unit, which is configured to send first indication information to the network device, the first indication information being used to indicate that the terminal device switches from the serving beam to the target beam.

In some implementations, in response to sending the first indication information, the processing unit is configured to communicate using the target beam

In some implementations, the terminal device further comprises a first receiving unit, which is configured to receive a first response message for the first indication information sent by the network device, the first response message being used to indicate that the terminal device is allowed to switch to the target beam, or the first response message being used to indicate that the network device confirms that the terminal device switches to the target beam.

In some implementations, in response to receiving the first response message, the processing unit is configured to communicate based on the target beam.

In some implementations, when the first operation comprises sending the first information to the network device, the first information comprises one or more of: a serving cell identity; a bandwidth part (BWP) identifier; a control resource set (CORESET) identifier; indication information for requesting beam switching; information of a target beam suggested by the terminal device; or a beam measurement result of at least one beam in the first beam set. The first beam set comprises the target beam and/or the serving beam.

In some implementations, when the first information comprises information of the target beam suggested by the terminal device, the information of the suggested target beam comprises one or more of: a QCL type associated with the suggested target beam; an identifier of the suggested target beam; a cell associated with the suggested target beam; a BWP of the suggested target beam; a beam type of the suggested target beam; a channel associated with the suggested target beam; a TCI framework to which the suggested target beam belongs; a TCI state type associated with the suggested target beam; or a number of TCI state(s) associated with the suggested target beam.

In some implementations, the terminal device further comprises a second receiving unit, which is configured to receive second indication information sent by the network device. The second indication information is used to indicate whether the terminal device is allowed to perform beam switching; and/or the second indication information carries information of the target beam.

In some implementations, the terminal device further comprises a second sending unit, which is configured to send a second response message for the second indication information to a network device, the second response message comprising one or more of: new transmission scheduling information of a target HARQ process, the target HARQ process being a HARQ process of the first information; information used to indicate whether the terminal device communicates based on the target beam; or information of a beam used by the terminal device.

In some implementations, before the terminal device performs the first operation, the serving beam and/or the target beam belong to the first beam set, the terminal device further comprises a third receiving unit configured to receive configuration information sent by the network device. The configuration information is used to configure the first beam set.

In some implementations, the configuration information comprises one or more of: TCI state(s) associated with the first beam set; spatial relation information associated with the first beam set; reference signal information associated with the first beam set; candidate beam information in the first beam set; or candidate reference signal information associated with the first beam set.

FIG. 6 is a schematic diagram of a network device according to an embodiment of the present application. The network device shown in FIG. 6 may include a receiving unit 610.

The receiving unit is configured to receive target information sent by a terminal device. The target information comprises one of: first indication information, the first indication information being configured to indicate that the terminal device switches from a serving beam to a target beam; or first information, the first information comprising beam measurement result(s). A triggering of the first information is based on a first condition.

In some implementations, the first condition is associated with one or more of: a first timer; a location of the terminal device; a beam measurement result of the serving beam; a beam measurement result of the target beam; a first counter, the first counter being configured to indicate a number of measurements performed on the target beam and/or the serving beam; or beam measurement results of beams in a first beam set, the first beam set comprising the target beam and/or the serving beam.

In some implementations, when the first condition is associated with the beam measurement result of the target beam, the first condition comprises that the beam measurement result of the target beam is greater than a first threshold, or the first condition comprises that the beam measurement result of the target beam is lower than a first threshold.

In some implementations, when the first condition is associated with a beam measurement result of the serving beam, the first condition comprises that the beam measurement result of the serving beam is lower than or equal to a second threshold, or that the beam measurement result of the serving beam is lower than or equal to a second threshold.

In some implementations, when the first condition is associated with the beam measurement result of the serving beam and the beam measurement result of the target serving beam, the first condition comprises that the beam measurement result of the target beam is higher than the beam measurement result of the serving beam, and a difference between the beam measurement result of the target beam and the beam measurement result of the serving beam is greater than a third threshold, or a difference between the beam measurement result of the target beam and the beam measurement result of the serving beam is lower than or equal to a third threshold.

In some implementations, when the first condition is associated with the beam measurement results of beams in the first beam set, the first condition comprises one or more of: a number of first beam(s) in the first beam set is greater than a fourth threshold; an average beam measurement result of the beams in the first beam set is greater than or equal to a sixth threshold; in a first order associated with the first beam set, the serving beam is located after optimal N beams, and the first order is to sort the beams in the first beam set in a descending order of beam measurement results; or an optimal beam in the first beam set is not the serving beam. The first beam(s) is beam(s), in the first beam set, of which beam measurement result(s) is greater than or equal to a fifth threshold, or the first beam(s) is beam(s), in the first beam set, of which beam measurement result(s) is lower than a fifth threshold.

In some implementations, when the first condition is associated with the first timer, the first condition comprises expiration of the first timer.

In some implementations, the sending of the first indication information is used to trigger the terminal device to switch from the serving beam to the target beam.

In some implementations, when the target information comprises the first indication information, the receiving unit is further configured to receive a first response message for the first indication information sent by the terminal device, the first response message being used to indicate that the terminal device is allowed to switch to the target beam, or the first response message being used to indicate that the network device confirms that the terminal device switches to the target beam.

In some implementations, the reception of the first response message is used to trigger the terminal device to switch from the serving beam to the target beam.

In some implementations, when the target information comprises the first information, the first information comprises one or more of: a serving cell identity; a bandwidth part (BWP) identifier; a control resource set (CORESET) identifier; indication information for requesting beam switching; information of a target beam suggested by the terminal device; or a beam measurement result of at least one beam in the first beam set. The first beam set comprises the target beam and/or the serving beam.

In some implementations, when the first information comprises information of the target beam suggested by the terminal device, the information of the suggested target beam comprises one or more of: a QCL type associated with the suggested target beam; an identifier of the suggested target beam; a cell associated with the suggested target beam; a BWP of the suggested target beam; a beam type of the suggested target beam; a channel associated with the suggested target beam; a TCI framework to which the suggested target beam belongs; a TCI state type associated with the suggested target beam; or a number of TCI state(s) associated with the suggested target beam.

In some implementations, the network device further comprises a first sending unit, which is configured to second indication information to the terminal device. The second indication information is used to indicate whether the terminal device is allowed to perform beam switching; and/or the second indication information carries information of the target beam.

In some implementations, the receiving unit is further configured to receive a second response message for the second indication information sent by the terminal device, the second response message comprising one or more of: new transmission scheduling information of a target HARQ process, the target HARQ process being a HARQ process of the first information; information used to indicate whether the terminal device communicates based on the target beam; or information of a beam used by the terminal device.

In some implementations, the serving beam and/or the target beam belong to a first beam set. The network device further comprises a second sending unit, which is configured to send configuration information to the terminal device. The configuration information is used to configure the first beam set.

In some implementations, the configuration information comprises one or more of: TCI state(s) associated with the first beam set; spatial relation information associated with the first beam set; reference signal information associated with the first beam set; candidate beam information in the first beam set; or candidate reference signal information associated with the first beam set.

In an alternative embodiment, the processing unit 510 may be a processor 710. The terminal device 700 may further include a transceiver 730 and a memory 720, as shown in FIG. 7.

In an alternative embodiment, the receiving unit 610 may be a transceiver 730. The network device 800 may also include a processor 710 and a memory 720, as specifically shown in FIG. 7.

FIG. 7 is a schematic configuration diagram of a communication device according to an embodiment of the present application. The dashed line in FIG. 7 indicates that the unit or module is optional. The apparatus 700 may be used to implement the method described in the method embodiments described above. The apparatus 700 may be a chip, a terminal device, or a network device.

The apparatus 700 may include one or more processors 710. The processor 710 may support the apparatus 700 to implement the methods described in the previous method embodiments. The processor 710 may be a general-purpose processor or a special-purpose processor. For example, the processor may be a central processing unit (CPU). Alternatively, the processor may also be another general purpose processor, a digital signal processor (DSP), an application specific integrated circuit (ASIC), a field programmable gate array (FPGA) or other programmable logic device, discrete gate or transistor logic device, a discrete hardware component, or the like. The general purpose processor may be a microprocessor or the processor may be any conventional processor or the like.

The apparatus 700 may also include one or more memories 720. The memory 720 has stored a program that can be executed by the processor 710 to cause the processor 710 to perform the method described in the above method embodiments. The memory 720 may be independent of the processor 710 or may be integrated in the processor 710.

The apparatus 700 may also include a transceiver 730. The processor 710 may communicate with other devices or chips through the transceiver 730. For example, the processor 710 may transmit and receive data with other devices or chips through the transceiver 730.

The embodiment of the present application also provides a computer-readable storage medium for storing a program. The computer-readable storage medium can be applied to a terminal or a network device provided by the embodiment of the present application, and the program causes a computer to execute a method performed by the terminal or the network device in each embodiment of the present application.

Embodiments of the present application also provide a computer program product. The computer program product includes a program. The computer program product can be applied to a terminal or a network device provided by the embodiment of the present application, and the program causes a computer to execute a method performed by the terminal or the network device in each embodiment of the present application.

Embodiments of the present application also provide a computer program. The computer program can be applied to a terminal or a network device provided by the embodiment of the present application, and the computer program causes a computer to execute a method performed by the terminal or the network device in each embodiment of the present application.

It should be understood that in the embodiments of the present application, the beam may be a transmit beam, and may also be referred to as a "spatial domain transmission filter". Of course, in the embodiments of the present application, the beam may be a receive beam, and may also be referred to as a "spatial reception filter". In addition, in the embodiments of the present application, the beam may be represented by a reference signal associated with the beam, that is, the beam in the embodiments of the present application may be replaced with a reference signal. The reference signal may be any one of the reference signals specified in the known communication system, for example, an SSB. For another example, a CSI-RS. For another example, an SRS. For another example, PDCCH DMRS. Of course, in the embodiments of the present application, the reference signal may also be a new reference signal introduced in a future communication system.

In addition, the terms "system" and "network" may be used interchangeably in this application. In addition, the terminology used in the present application is for explanation of specific embodiments of the present application only, and is not intended to limit the present application. The terms "first," "second," "third," and "fourth," etc. in the specification and claims of the present application and the accompanying drawings are used to distinguish different objects, and are not used to describe a specific order. Furthermore, the terms "comprising" and "having" and any variations thereof are intended to cover non-exclusive inclusions.

In the embodiments of the present application, the "indication" mentioned may be a direct indication, an indirect indication, or an associated relationship. For example, A indicates B, which may mean that A directly indicates B, for example, B can be acquired by A. It may also mean that A indicates B indirectly, for example A indicates C, and B can be acquired through C. It may also mean that there is an association relationship between A and B.

In the embodiments of the present application, "B corresponding to A" means that B is associated with A, and B can be determined according to A. However, it should also be understood that determining B according to A does not mean that B is determined according to A alone, and it may also mean that B may be determined according to A and/or other information.

In the embodiments of the present application, the term "correspondence" may indicate that there is a direct correspondence relationship or an indirect correspondence relationship between the two, may indicate that there is a correlation relationship between the two, or may indicate a relationship between indicating and being indicated, configuring and being configured, or the like.

In the embodiment of the present application, "predefined" or "preconfigured" may be realized by storing corresponding codes, tables, or other methods that can be used to indicate relevant information in advance in devices (including, for example, terminal device and network device), and the present application does not limit specific implementation methods thereof. For example, predefined may refer to defined in the protocol.

In the embodiments of the present application, the "protocol" may refer to a standard protocol in the communication field, and may include, for example, an LTE protocol, an NR protocol, and related protocols applied to future communication systems, and the present application is not limited thereto.

The term "and/or" in the embodiments of the present application is only an association relationship describing associated objects, and indicates that there may be three kinds of relationships, for example, A and/or B, which may indicate there cases: A exists alone, A and B exist simultaneously, and B exists alone. In addition, the character "/" in this article generally indicates that the related object before this character and the related object after this character are in an "or" relationship.

In various embodiments of the present application, the size of the sequence number of the above-described processes does not mean the sequence of execution, the sequence of execution of each process should be determined by its function and internal logic, and it should not constitute any limitation on the implementation process of the embodiments of the present application.

In several embodiments provided herein, it should be understood that the disclosed systems, apparatuses, and methods may be implemented in other ways. For example, the device embodiments described above are merely schematic, for example, the division of units is only one logical function division, and there may be other division methods in actual implementation, for example, multiple units or components may be combined or integrated into another system, or some features may be ignored or not implemented. In addition, the coupling or direct coupling or communication connection between each other shown or discussed may be an indirect coupling or communication connection through some interfaces, devices or units, which may be electrical, mechanical or otherwise.

The units described as separate units may or may not be physically separate, and the units displayed as units may or may not be physical units, that is, they may be located in one place or may be distributed over a plurality of network units. Some or all of the units may be selected according to actual needs to achieve the purpose of the solution of the present embodiment.

In addition, each functional unit in each embodiment of the present application may be integrated in one processing unit, each unit may be physically present alone, or two or more units may be integrated in one unit.

In the embodiments described above, it may be implemented in whole or in part by software, hardware, firmware, or any combination thereof. When implemented using software, it may be implemented in whole or in part in the form of a computer program product. The computer program product includes one or more computer instructions. When the computer program instructions are loaded and executed on a computer, part or all of the processes or functions described in accordance with embodiments of the present application are generated. The computer may be a general purpose computer, a special purpose computer, a computer network, or other programmable device. The computer instructions may be stored in a computer-readable storage medium or transmitted from one computer-readable storage medium to another computer-readable storage medium, for example, the computer instructions may be transmitted from one website site, computer, server, or data center by wired (e.g., coaxial cable, optical fiber, digital subscriber line (DSL)) or wireless (e.g., infrared, radio, microwave, etc.) means to another website site, computer, server, or data center. The computer-readable storage medium may be any available medium that can be read by a computer or a data storage device such as a server, a data center, or the like that includes one or more available media integrations. The available media may be magnetic media (e.g., floppy disk, hard disk, magnetic tape), optical media (e.g., digital video disc (DVD)), or semiconductor media (e.g., solid state disk (SSD)), etc.

The above is merely a specific embodiment of the present application, but the scope of protection of the present application is not limited thereto, and any changes or substitutions, that a person skilled in the art can easily think of, within the technical scope disclosed in the present application should be covered within the scope of protection of the present application. Therefore, the scope of protection of the present application should be based on the scope of protection of the claims.

## Claims

1. A method of wireless communication, comprising:
when a first condition is satisfied, performing, by a terminal device, a first operation, wherein the first operation comprises one of:
switching from a serving beam to a target beam; or
sending first information to a network device, the first information comprising beam measurement result(s).

2. The method of claim 1, wherein the first condition is associated with one or more of:
a first timer;
a location of the terminal device;
a beam measurement result of the serving beam;
a beam measurement result of the target beam;
a first counter, the first counter being configured to indicate a number of measurements performed on the target beam and/or the serving beam; or
beam measurement results of beams in a first beam set, the first beam set comprising the target beam and/or the serving beam.

3. The method of claim 1 or 2, wherein when the first condition is associated with the beam measurement result of the target beam, the first condition comprises that the beam measurement result of the target beam is greater than a first threshold, or the first condition comprises that the beam measurement result of the target beam is lower than a first threshold.

4. The method of any one of claims 1-3, wherein when the first condition is associated with a beam measurement result of the serving beam, the first condition comprises that the beam measurement result of the serving beam is lower than or equal to a second threshold, or that the beam measurement result of the serving beam is lower than or equal to a second threshold.

5. The method of any one of claims 1-4, wherein when the first condition is associated with the beam measurement result of the serving beam and the beam measurement result of the target serving beam, the first condition comprises that the beam measurement result of the target beam is higher than the beam measurement result of the serving beam, and a difference between the beam measurement result of the target beam and the beam measurement result of the serving beam is greater than a third threshold, or a difference between the beam measurement result of the target beam and the beam measurement result of the serving beam is lower than or equal to a third threshold.

6. The method of any one of claims 1-5, wherein when the first condition is associated with the beam measurement results of beams in the first beam set, the first condition comprises one or more of:
a number of first beam(s) in the first beam set is greater than a fourth threshold, wherein the first beam(s) is beam(s), in the first beam set, of which beam measurement result(s) is greater than or equal to a fifth threshold, or the first beam(s) is beam(s), in the first beam set, of which beam measurement result(s) is lower than a fifth threshold;
an average beam measurement result of the beams in the first beam set is greater than or equal to a sixth threshold;
an average beam measurement result of the beams in the first beam set is lower than a sixth threshold;
in a first order associated with the first beam set, the serving beam is located after optimal N beams, and the first order is to sort the beams in the first beam set in a descending order of beam measurement results; or
an optimal beam in the first beam set is not the serving beam.

7. The method of any one of claims 1-6, wherein when the first condition is associated with the first timer, the first condition comprises expiration of the first timer.

8. The method of any one of claims 1-7, wherein when the first operation comprises switching from the serving beam to the target beam, the method further comprises:
communicating, by the terminal device, based on the target beam at a first time, the first time being predefined.

9. The method of any one of claims 1-8, wherein when the first operation comprises switching from the serving beam to the target beam, the method further comprises:
sending, by the terminal device, first indication information to the network device, the first indication information being used to indicate that the terminal device switches from the serving beam to the target beam.

10. The method of claim 9, further comprising:
in response to sending the first indication information, communicating, by the terminal device, using the target beam.

11. The method of claim 9, further comprising:
receiving, by the terminal device, a first response message for the first indication information sent by the network device, the first response message being used to indicate that the terminal device is allowed to switch to the target beam, or the first response message being used to indicate that the network device confirms that the terminal device switches to the target beam.

12. The method of claim 11, further comprising:
in response to receiving the first response message, communicating, by the terminal device, based on the target beam.

13. The method of any one of claims 1-7, wherein when the first operation comprises sending the first information to the network device, the first information comprises one or more of:
a serving cell identity;
a bandwidth part (BWP) identifier;
a control resource set (CORESET) identifier;
indication information for requesting beam switching;
information of a target beam suggested by the terminal device; or
a beam measurement result of at least one beam in the first beam set, the first beam set comprising the target beam and/or the serving beam.

14. The method of claim 13, wherein when the first information comprises information of the target beam suggested by the terminal device, the information of the suggested target beam comprises one or more of:
a QCL type associated with the suggested target beam;
an identifier of the suggested target beam;
a cell associated with the suggested target beam;
a BWP of the suggested target beam;
a beam type of the suggested target beam;
a channel associated with the suggested target beam;
a TCI framework to which the suggested target beam belongs;
a TCI state type associated with the suggested target beam; or
a number of TCI state(s) associated with the suggested target beam.

15. The method of claim 13 or 14, further comprising:
receiving, by the terminal device, second indication information sent by the network device, wherein the second indication information is used to indicate whether the terminal device is allowed to perform beam switching; and/or
the second indication information carries information of the target beam.

16. The method of claim 15, further comprising:
sending, by the terminal device, a second response message for the second indication information to a network device, the second response message comprising one or more of:
new transmission scheduling information of a target HARQ process, the target HARQ process being a HARQ process of the first information;
information used to indicate whether the terminal device communicates based on the target beam; or
information of a beam used by the terminal device.

17. The method of any one of claims 1-16, wherein before performing, by the terminal device, the first operation, the serving beam and/or the target beam belong to the first beam set, the method further comprising:
receiving, by the terminal device, configuration information sent by the network device, the configuration information being used to configure the first beam set.

18. The method of claim 17, wherein the configuration information comprises one or more of:
TCI state(s) associated with the first beam set;
spatial relation information associated with the first beam set;
reference signal information associated with the first beam set;
candidate beam information in the first beam set; or
candidate reference signal information associated with the first beam set.

19. A method of wireless communication, comprising:
receiving, by a network device, target information sent by a terminal device, wherein the target information comprises one of:
first indication information, wherein the first indication information is configured to indicate that the terminal device switches from a serving beam to a target beam;
first information, wherein the first information comprises beam measurement result(s), and a triggering of the first information is based on a first condition.

20. The method of claim 19, wherein the first condition is associated with one or more of:
a first timer;
a location of the terminal device;
a beam measurement result of the serving beam;
a beam measurement result of the target beam;
a first counter, the first counter being configured to indicate a number of measurements performed on the target beam and/or the serving beam; or
beam measurement results of beams in a first beam set, the first beam set comprising the target beam and/or the serving beam.

21. The method of claim 19 or 20, wherein when the first condition is associated with the beam measurement result of the target beam, the first condition comprises that the beam measurement result of the target beam is greater than a first threshold, or the first condition comprises that the beam measurement result of the target beam is lower than a first threshold.

22. The method of any one of claims 19-21, wherein when the first condition is associated with a beam measurement result of the serving beam, the first condition comprises that the beam measurement result of the serving beam is lower than or equal to a second threshold, or that the beam measurement result of the serving beam is lower than or equal to a second threshold.

23. The method of any one of claims 19-22, wherein when the first condition is associated with the beam measurement result of the serving beam and the beam measurement result of the target serving beam, the first condition comprises that the beam measurement result of the target beam is higher than the beam measurement result of the serving beam, and a difference between the beam measurement result of the target beam and the beam measurement result of the serving beam is greater than a third threshold, or a difference between the beam measurement result of the target beam and the beam measurement result of the serving beam is lower than or equal to a third threshold.

24. The method of any one of claims 19-23, wherein when the first condition is associated with the beam measurement results of beams in the first beam set, the first condition comprises one or more of:
a number of first beam(s) in the first beam set is greater than a fourth threshold, wherein the first beam(s) is beam(s), in the first beam set, of which beam measurement result(s) is greater than or equal to a fifth threshold, or the first beam(s) is beam(s), in the first beam set, of which beam measurement result(s) is lower than a fifth threshold;
an average beam measurement result of the beams in the first beam set is greater than or equal to a sixth threshold;
in a first order associated with the first beam set, the serving beam is located after optimal N beams, and the first order is to sort the beams in the first beam set in a descending order of beam measurement results; or
an optimal beam in the first beam set is not the serving beam.

25. The method of any one of claims 19-24, wherein when the first condition is associated with the first timer, the first condition comprises expiration of the first timer.

26. The method of any one of claims 19-25, wherein sending of the first indication information is used to trigger the terminal device to switch from the serving beam to the target beam.

27. The method of any one of claims 19-26, wherein when the target information comprises the first indication information, the method further comprises:
receiving, by the network device, a first response message for the first indication information sent by the terminal device, the first response message being used to indicate that the terminal device is allowed to switch to the target beam, or the first response message being used to indicate that the network device confirms that the terminal device switches to the target beam.

28. The method of claim 27, wherein reception of the first response message is used to trigger the terminal device to switch from the serving beam to the target beam.

29. The method of claim 19, wherein when the target information comprises the first information, the first information comprises one or more of:
a serving cell identity;
a bandwidth part (BWP) identifier;
a control resource set (CORESET) identifier;
indication information for requesting beam switching;
information of a target beam suggested by the terminal device; or
a beam measurement result of at least one beam in the first beam set, the first beam set comprising the target beam and/or the serving beam.

30. The method of claim 29, wherein when the first information comprises information of the target beam suggested by the terminal device, the information of the suggested target beam comprises one or more of:
a QCL type associated with the suggested target beam;
an identifier of the suggested target beam;
a cell associated with the suggested target beam;
a BWP of the suggested target beam;
a beam type of the suggested target beam;
a channel associated with the suggested target beam;
a TCI framework to which the suggested target beam belongs;
a TCI state type associated with the suggested target beam; or
a number of TCI state(s) associated with the suggested target beam.

31. The method of claim 29 or 30, further comprising:
sending, by the network device, second indication information to the terminal device, wherein the second indication information is used to indicate whether the terminal device is allowed to perform beam switching; and/or
the second indication information carries information of the target beam.

32. The method of claim 31, further comprising:
receiving, by the network device, a second response message for the second indication information sent by the terminal device, the second response message comprising one or more of:
new transmission scheduling information of a target HARQ process, the target HARQ process being a HARQ process of the first information;
information used to indicate whether the terminal device communicates based on the target beam; or
information of a beam used by the terminal device.

33. The method of any one of claims 19-32, wherein the serving beam and/or the target beam belong to a first beam set, the method further comprising:
sending, by the network device, configuration information to the terminal device, wherein the configuration information is used to configure the first beam set.

34. The method of claim 33, wherein the configuration information comprises one or more of:
TCI state(s) associated with the first beam set;
spatial relation information associated with the first beam set;
reference signal information associated with the first beam set;
candidate beam information in the first beam set; or
candidate reference signal information associated with the first beam set.

35. A terminal device, comprising:
when a first condition is satisfied, a processing unit configured to perform a first operation, wherein the first operation comprises one of:
switching from a serving beam to a target beam; or
sending first information to a network device, the first information comprising beam measurement result(s).

36. The terminal device of claim 35, wherein the first condition is associated with one or more of:
a first timer;
a location of the terminal device;
a beam measurement result of the serving beam;
a beam measurement result of the target beam;
a first counter, the first counter being configured to indicate a number of measurements performed on the target beam and/or the serving beam; or
beam measurement results of beams in a first beam set, the first beam set comprising the target beam and/or the serving beam.

37. The terminal device of claim 35 or 36, wherein when the first condition is associated with the beam measurement result of the target beam, the first condition comprises that the beam measurement result of the target beam is greater than a first threshold, or the first condition comprises that the beam measurement result of the target beam is lower than a first threshold.

38. The terminal device of any one of claims 35-37, wherein when the first condition is associated with a beam measurement result of the serving beam, the first condition comprises that the beam measurement result of the serving beam is lower than or equal to a second threshold, or that the beam measurement result of the serving beam is lower than or equal to a second threshold.

39. The terminal device of any one of claims 35-38, wherein when the first condition is associated with the beam measurement result of the serving beam and the beam measurement result of the target serving beam, the first condition comprises that the beam measurement result of the target beam is higher than the beam measurement result of the serving beam, and a difference between the beam measurement result of the target beam and the beam measurement result of the serving beam is greater than a third threshold, or a difference between the beam measurement result of the target beam and the beam measurement result of the serving beam is lower than or equal to a third threshold.

40. The terminal device of any one of claims 35-39, wherein when the first condition is associated with the beam measurement results of beams in the first beam set, the first condition comprises one or more of:
a number of first beam(s) in the first beam set is greater than a fourth threshold, wherein the first beam(s) is beam(s), in the first beam set, of which beam measurement result(s) is greater than or equal to a fifth threshold, or the first beam(s) is beam(s), in the first beam set, of which beam measurement result(s) is lower than a fifth threshold;
an average beam measurement result of the beams in the first beam set is greater than or equal to a sixth threshold;
an average beam measurement result of the beams in the first beam set is lower than a sixth threshold;
in a first order associated with the first beam set, the serving beam is located after optimal N beams, and the first order is to sort the beams in the first beam set in a descending order of beam measurement results; or
an optimal beam in the first beam set is not the serving beam.

41. The terminal device of any one of claims 35-40, wherein when the first condition is associated with the first timer, the first condition comprises expiration of the first timer.

42. The terminal device of any one of claims 35-41, wherein when the first operation comprises switching from the serving beam to the target beam, the processing unit is configured to:
communicate based on the target beam at a first time, the first time being predefined.

43. The terminal device of any one of claims 35-42, wherein when the first operation comprises switching from the serving beam to the target beam, the terminal device further comprises:
a first sending unit, configured to send first indication information to the network device, the first indication information being used to indicate that the terminal device switches from the serving beam to the target beam.

44. The terminal device of claim 43, wherein,
in response to sending the first indication information, the processing unit is configured to communicate using the target beam.

45. The terminal device of claim 43, further comprising:
a first receiving unit, configured to receive a first response message for the first indication information sent by the network device, the first response message being used to indicate that the terminal device is allowed to switch to the target beam, or the first response message being used to indicate that the network device confirms that the terminal device switches to the target beam.

46. The terminal device of claim 45, wherein,
in response to receiving the first response message, the processing unit is configured to communicate based on the target beam.

47. The terminal device of any one of claims 35-41, wherein when the first operation comprises sending the first information to the network device, the first information comprises one or more of:
a serving cell identity;
a bandwidth part (BWP) identifier;
a control resource set (CORESET) identifier;
indication information for requesting beam switching;
information of a target beam suggested by the terminal device; or
a beam measurement result of at least one beam in the first beam set, the first beam set comprising the target beam and/or the serving beam.

48. The terminal device of claim 47, wherein when the first information comprises information of the target beam suggested by the terminal device, the information of the suggested target beam comprises one or more of:
a QCL type associated with the suggested target beam;
an identifier of the suggested target beam;
a cell associated with the suggested target beam;
a BWP of the suggested target beam;
a beam type of the suggested target beam;
a channel associated with the suggested target beam;
a TCI framework to which the suggested target beam belongs;
a TCI state type associated with the suggested target beam; or
a number of TCI state(s) associated with the suggested target beam.

49. The terminal device of claim 47 or 48, further comprising:
a second receiving unit, configured to receive second indication information sent by the network device, wherein the second indication information is used to indicate whether the terminal device is allowed to perform beam switching; and/or
the second indication information carries information of the target beam.

50. The terminal device of claim 49, further comprising:
a second sending unit, configured to send a second response message for the second indication information to a network device, the second response message comprising one or more of:
new transmission scheduling information of a target HARQ process, the target HARQ process being a HARQ process of the first information;
information used to indicate whether the terminal device communicates based on the target beam; or
information of a beam used by the terminal device.

51. The terminal device of any one of claims 35-50, wherein before the terminal device performs the first operation, the serving beam and/or the target beam belong to the first beam set, the terminal device further comprising:
a third receiving unit configured to receive configuration information sent by the network device, the configuration information being used to configure the first beam set.

52. The terminal device according to claim 51, wherein the configuration information comprises one or more of:
TCI state(s) associated with the first beam set;
spatial relation information associated with the first beam set;
reference signal information associated with the first beam set;
candidate beam information in the first beam set; or
candidate reference signal information associated with the first beam set.

53. A network device, comprising:
a receiving unit, configured to receive target information sent by a terminal device, wherein the target information comprises one of:
first indication information, wherein the first indication information is configured to indicate that the terminal device switches from a serving beam to a target beam; or
first information, wherein the first information comprises beam measurement result(s), and a triggering of the first information is based on a first condition.

54. The network device of claim 53, wherein the first condition is associated with one or more of:
a first timer;
a location of the terminal device;
a beam measurement result of the serving beam;
a beam measurement result of the target beam;
a first counter, the first counter being configured to indicate a number of measurements performed on the target beam and/or the serving beam; or
beam measurement results of beams in a first beam set, the first beam set comprising the target beam and/or the serving beam.

55. The network device of claim 53 or 54, wherein when the first condition is associated with the beam measurement result of the target beam, the first condition comprises that the beam measurement result of the target beam is greater than a first threshold, or the first condition comprises that the beam measurement result of the target beam is lower than a first threshold.

56. The network device of any one of claims 53-55, wherein when the first condition is associated with a beam measurement result of the serving beam, the first condition comprises that the beam measurement result of the serving beam is lower than or equal to a second threshold, or that the beam measurement result of the serving beam is lower than or equal to a second threshold.

57. The network device of any one of claims 53-56, wherein when the first condition is associated with the beam measurement result of the serving beam and the beam measurement result of the target serving beam, the first condition comprises that the beam measurement result of the target beam is higher than the beam measurement result of the serving beam, and a difference between the beam measurement result of the target beam and the beam measurement result of the serving beam is greater than a third threshold, or a difference between the beam measurement result of the target beam and the beam measurement result of the serving beam is lower than or equal to a third threshold.

58. The network device of any one of claims 53-57, wherein when the first condition is associated with the beam measurement results of beams in the first beam set, the first condition comprises one or more of:
a number of first beam(s) in the first beam set is greater than a fourth threshold, wherein the first beam(s) is beam(s), in the first beam set, of which beam measurement result(s) is greater than or equal to a fifth threshold, or the first beam(s) is beam(s), in the first beam set, of which beam measurement result(s) is lower than a fifth threshold;
an average beam measurement result of the beams in the first beam set is greater than or equal to a sixth threshold;
in a first order associated with the first beam set, the serving beam is located after optimal N beams, and the first order is to sort the beams in the first beam set in a descending order of beam measurement results; or
an optimal beam in the first beam set is not the serving beam.

59. The network device of any one of claims 53-58, wherein when the first condition is associated with the first timer, the first condition comprises expiration of the first timer.

60. The network device according to any one of claims 53-59, wherein sending of the first indication information is used to trigger the terminal device to switch from the serving beam to the target beam.

61. The network device according to any one of claims 53-60, wherein when the target information comprises the first indication information, the receiving unit is further configured to:
receive a first response message for the first indication information sent by the terminal device, the first response message being used to indicate that the terminal device is allowed to switch to the target beam, or the first response message being used to indicate that the network device confirms that the terminal device switches to the target beam.

62. The network device of claim 61, wherein reception of the first response message is used to trigger the terminal device to switch from the serving beam to the target beam.

63. The network device of claim 53, wherein when the target information comprises the first information, the first information comprises one or more of:
a serving cell identity;
a bandwidth part (BWP) identifier;
a control resource set (CORESET) identifier;
indication information for requesting beam switching;
information of a target beam suggested by the terminal device; or
a beam measurement result of at least one beam in the first beam set, the first beam set comprising the target beam and/or the serving beam.

64. The network device of claim 63, wherein when the first information comprises information of the target beam suggested by the terminal device, the information of the suggested target beam comprises one or more of:
a QCL type associated with the suggested target beam;
an identifier of the suggested target beam;
a cell associated with the suggested target beam;
a BWP of the suggested target beam;
a beam type of the suggested target beam;
a channel associated with the suggested target beam;
a TCI framework to which the suggested target beam belongs;
a TCI state type associated with the suggested target beam; or
a number of TCI state(s) associated with the suggested target beam.

65. The network device of claim 63 or 64, further comprising:
a first sending unit, configured to second indication information to the terminal device, wherein the second indication information is used to indicate whether the terminal device is allowed to perform beam switching; and/or
the second indication information carries information of the target beam.

66. The network device of claim 65, wherein the receiving unit is further configured to:
receive a second response message for the second indication information sent by the terminal device, the second response message comprising one or more of:
new transmission scheduling information of a target HARQ process, the target HARQ process being a HARQ process of the first information;
information used to indicate whether the terminal device communicates based on the target beam; or
information of a beam used by the terminal device.

67. The network device of any one of claims 53-66, wherein the serving beam and/or the target beam belong to a first beam set, the network device further comprising:
a second sending unit, configured to send configuration information to the terminal device, wherein the configuration information is used to configure the first beam set.

68. The network device of claim 67, wherein the configuration information comprises one or more of:
TCI state(s) associated with the first beam set;
spatial relation information associated with the first beam set;
reference signal information associated with the first beam set;
candidate beam information in the first beam set; or
candidate reference signal information associated with the first beam set.

69. A terminal device comprising a transceiver, a memory and a processor, wherein the memory is configured to store a program, and the processor is configured to invoke the program in the memory and control the transceiver to receive or transmit signals to cause the terminal device to perform the method of any one of claims 1-18.

70. A network device comprising a transceiver, a memory and a processor, wherein the memory is configured to store a program, and the processor is configured to invoke the program in the memory and control the transceiver to receive or transmit signals to cause the network device to perform the method of any one of claims 19-34.

71. An apparatus, wherein the apparatus comprises a processor configured to invoke a program from a memory to cause the apparatus to perform the method of any one of claims 1-34.

72. A chip, wherein the chip comprises a processor configured to invoke a program from a memory to cause a device on which the chip is mounted to perform the method of any one of claims 1-34.

73. A computer-readable storage medium having stored thereon a program, wherein the program causes a computer to perform the method of any one of claims 1-34.

74. A computer program product comprising a program, wherein the program causes a computer to perform the method of any one of claims 1-34.

75. A computer program that causes a computer to perform the method of any one of claims 1-34.
